# EUROPEAN PATENT APPLICATION

(11) **EP 3 301 555 A1**
(43) Date of publication of application: **04.04.2018**
(21) Application number: 17194185.9
(22) Date of filing: 29.09.2017
(51) Int. Cl.: G06F 3/044

(54) **DISPLAY APPARATUS, CONTROL METHOD AND CONTROLLER THEREOF, AND ELECTRONIC DEVICE**

(30) Priority: 30.09.2016 CN 201610875538
(71) Applicant: Beijing Xiaomi Mobile Software Co., Ltd., Beijing 100085 (CN)
(72) Inventor: LIU, Anyu, Qinghe Middle Street Haidian District Beijing, 100085 (CN); JIANG, Zhongsheng, Qinghe Middle Street Haidian District Beijing, 100085 (CN); YU, Lei, Qinghe Middle Street Haidian District Beijing, 100085 (CN)
(74) Representative: Hughes, Andrea Michelle

(57) **Abstract**

The present invention relates to a display apparatus and an electronic device. The display apparatus comprises: a display panel; a fingerprint sensor, provided in an effective display region of the display panel, for fingerprint identification; and a first control chip electrically connected to the display panel. When a first region in which the fingerprint sensor is provided and a second region in which the fingerprint sensor is not provided receive a signal indicating display of a same grayscale by the first and second regions, the first control chip adjusts a grayscale of the first region and/or a grayscale of the second region in accordance with the signal, a light transmittance of the first region and a light transmittance of the second region, so that the first region and the second region display the same grayscale. With the technical solution of the present invention, after a signal indicating display of the same grayscale is received, a grayscale of the first region and/or a grayscale of the second region may be adjusted in accordance with the signal, a light transmittance of the first region and a light transmittance of the second region, so that the first region and the second region can display the same grayscale, thereby ensuring a user's viewing experience.

## Description

### TECHNICAL FIELD

The present application generally relates to the technical field of displaying, and more particularly, to a display apparatus, a control method of the display apparatus, a controller of the display apparatus and an electronic device.

### BACKGROUND

With the diversity of encryption/decryption operations of a smart terminal, fingerprints, which are attributes owned by everyone but varying from person to person, have drawn more and more attention. Accordingly, fingerprint identification modules become more and more widely integrated in smart terminals.

Nowadays, a fingerprint identification module is typically provided in a smart terminal (e.g., a handset) in two manners, one of which is to dispose the fingerprint identification module at the back of the smart terminal and the other of which is to dispose the module at the front of the smart terminal. The fingerprint identification module disposed at the back is usually located in the upper and middle regions of a casing of the terminal, while the fingerprint identification module disposed at the front is integrated with a HOME key.

However, no matter which of the above manners is adopted, it is necessary to fabricate a separate fingerprint identification module and then dispose the same in a smart terminal, which is a complex manufacturing process.

### SUMMARY

In order to address the deficiency in the related art, the present invention provides a display apparatus, a control method of the display apparatus, a controller of the display apparatus and an electronic device.

According to a first aspect of the present invention, there is provided a display apparatus. The display apparatus comprises: a display panel; a fingerprint sensor, provided in an effective display region of the display panel, for fingerprint identification; and a first control chip electrically connected to the display panel. When a first region in which the fingerprint sensor is provided and a second region in which the fingerprint sensor is not provided receive a signal indicating display of a same grayscale by the first and second regions, the first control chip adjusts a grayscale of the first region and/or a grayscale of the second region in accordance with the signal, a light transmittance of the first region and a light transmittance of the second region, so that the first region and the second region display the same grayscale.

Optionally, the first control chip increases brightness of light which passes through the first region and/or decreases brightness of light which passes through the second region, so that the first region and the second region display the same grayscale.

Optionally, when a grayscale corresponding to the signal is a highest grayscale which the display panel can display, the first control chip decreases brightness of light which passes through the second region, so that the first region and the second region display the same grayscale.

Optionally, the fingerprint sensor includes at least one of the following: a photoelectric sensor, a capacitance sensor and an ultrasonic sensor.

Optionally, when the fingerprint sensor is the photoelectric sensor, the display panel comprises an array substrate. The array substrate comprises: a base; a thin film transistor provided on a side of the base; the photoelectric sensor, provided on the side of the base, for fingerprint identification; and a passivation layer provided on a side of both the thin film transistor and the photoelectric sensor away from the base.

Optionally, the array substrate further comprises: a flat layer provided on a side of the passivation layer away from the thin film transistor.

Optionally, the display panel further comprises: a color film substrate disposed opposite to the array substrate, wherein at least one black matrix is arranged in the color film substrate and disposed opposite to the photoelectric sensor.

Optionally, the display apparatus further comprises: a backlight module provided on a side of the array substrate away from the color film substrate; and a touch module provided on a side of the color film substrate away from the array substrate, or provided between the array substrate and the color film substrate.

Optionally, the display apparatus further comprises: a second control chip electrically connected to the thin film transistor, the photoelectric sensor and the touch module. The touch module transmits a control signal to the second control chip when sensing a touch signal at a position corresponding to the photoelectric sensor, so as to control the photoelectric sensor and the thin film transistor corresponding to the photoelectric sensor to start operation.

Optionally, the display apparatus further comprises: a data line and a pixel electrode, wherein the thin film transistor is electrically connected to the data line and the pixel electrode, and the data line transmits a data signal to the pixel electrode via the thin film transistor. The control chip adjusts the data signal transmitted through the data line corresponding to the photoelectric sensor when receiving the control signal, so that light emitted from the backlight module becomes monochromatic light or white light after passing through the display panel.

Optionally, the display apparatus further comprises: a status detection unit configured to detect a working status of the display apparatus and transmit the detected working status to the touch module. The touch module determines whether the display apparatus is in a status of being ready for fingerprint identification when sensing a touch signal at the position corresponding to the photoelectric sensor, and transmits the control signal to the control chip if the display apparatus is in the status of being ready for fingerprint identification.

According to a second aspect of the present invention, there is provided a display apparatus controlling method for use in the foregoing display apparatus. The method comprises: detecting a first signal of grayscale received by the first region in which the fingerprint sensor is provided and a second signal of grayscale received by the second region in which the fingerprint sensor is not provided; and when the first signal is the same as the second signal, adjusting a grayscale of the first region and/or a grayscale of the second region in accordance with the first signal or the second signal and a light transmittance of the first region and a light transmittance of the second region, so that the first region and the second region display the same grayscale.

Optionally, adjusting the grayscale of the first region and/or the grayscale of the second region so that the first region and the second region display the same grayscale comprises: increasing brightness of light which passes through the first region and/or decreasing brightness of light which passes through the second region, so that the first region and the second region display the same grayscale.

Optionally, when the grayscale corresponding to the signal is a highest grayscale which the display panel can display, adjusting the grayscale of the first region and/or the grayscale of the second region so that the first region and the second region display the same grayscale comprises: decreasing brightness of light which passes through the second region, so that the first region and the second region display the same grayscale.

According to a third aspect of the present invention, there is provided a display apparatus controller for use in the foregoing display apparatus. The controller comprises: a detection unit configured to detect a first signal of grayscale received by the first region in which the fingerprint sensor is provided and a second signal of grayscale received by the second region in which the fingerprint sensor is not provided; and an adjusting unit configured to, when the first signal is the same as the second signal, adjust a grayscale of the first region and/or a grayscale of the second region in accordance with the first signal or the second signal and a light transmittance of the first region and a light transmittance of the second region, so that the first region and the second region display the same grayscale.

Optionally, the adjusting unit comprises: an increasing sub-unit configured to increase brightness of light which passes through the first region, so that the first region and the second region display the same grayscale; and a decreasing sub-unit configured to decrease brightness of light which passes through the second region, so that the first region and the second region display the same grayscale.

Optionally, the decreasing sub-unit is configured to, when a grayscale corresponding to the signal is a highest grayscale which the display panel can display, decrease brightness of light which passes through the second region, so that the first region and the second region display the same grayscale.

According to a fourth aspect of the present invention, there is provided an electronic device, which comprises: a processor, and a memory storing instructions executable by the processor. The electronic device further comprises a display apparatus. The display apparatus comprises: a display panel; a fingerprint sensor, provided in an effective display region of the display panel, for fingerprint identification; and a first control chip electrically connected to the display panel. When a first region in which the fingerprint sensor is provided and a second region in which the fingerprint sensor is not provided receive a signal indicating display of a same grayscale by the first and second regions, the first control chip adjusts a grayscale of the first region and/or a grayscale of the second region in accordance with the signal, a light transmittance of the first region and a light transmittance of the second region, so that the first region and the second region display the same grayscale.

Technical solutions provided by embodiments of the present invention may have the following beneficial effects.

As can be seen from the foregoing embodiments, according to the present invention, after a signal indicating display of the same grayscale is received, a grayscale of the first region and/or a grayscale of the second region may be adjusted in accordance with the signal, a light transmittance of the first region and a light transmittance of the second region, so that the first region and the second region display the same grayscale, thereby ensuring a user's viewing experience.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating a structure of a display apparatus according to an exemplary embodiment.
Fig. 2 is a schematic diagram illustrating a structure of an array substrate according to an exemplary embodiment.
Fig. 3 is a schematic diagram illustrating a principle of fingerprint identification according to an exemplary embodiment.
Fig. 4 is a schematic diagram illustrating a structure of another array substrate according to an exemplary embodiment.
Fig. 5 is a schematic diagram illustrating a structure of a display panel according to an exemplary embodiment.
Fig. 6 is a schematic diagram illustrating a structure of another display panel according to an exemplary embodiment.
Fig. 7 is a schematic flowchart illustrating a display apparatus controlling method according to an exemplary embodiment.
Fig. 8 is a schematic flowchart illustrating another display apparatus controlling method according to an exemplary embodiment.
Fig. 9 is a schematic block diagram illustrating a display apparatus controller according to an exemplary embodiment.
Fig. 10 is a schematic block diagram illustrating another display apparatus controller according to an exemplary embodiment.
Fig. 11 is a schematic flowchart illustrating a fabricating method of an array substrate according to an exemplary embodiment.
Fig. 12 is a schematic flowchart illustrating another fabricating method of an array substrate according to an exemplary embodiment.
Fig. 13 is a block diagram illustrating a display apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

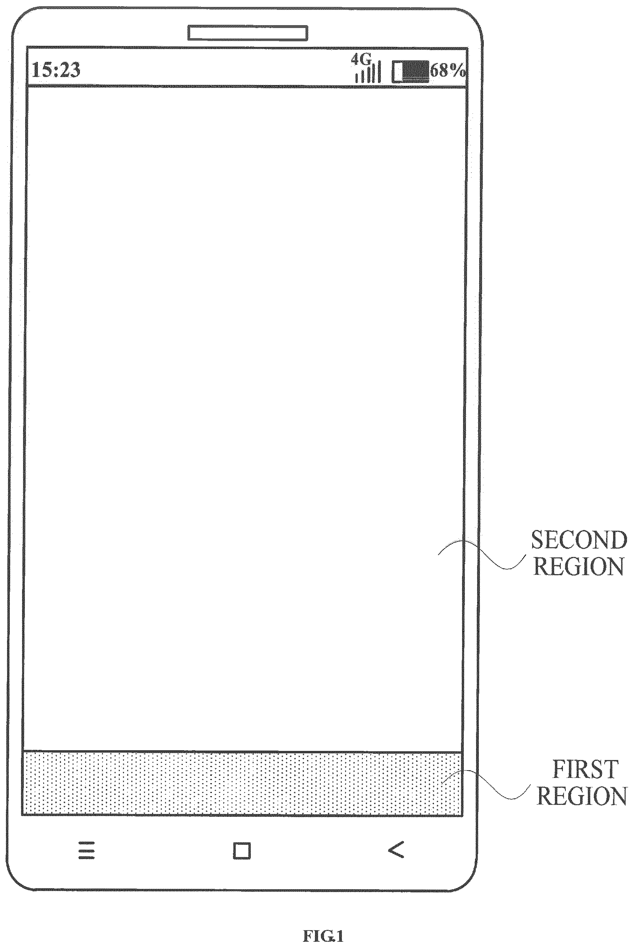

Fig. 1 is a schematic diagram illustrating a structure of a display apparatus according to an exemplary embodiment. As shown in Fig. 1, taking an example where the display apparatus is a handset, the display apparatus comprises: a display panel; a fingerprint sensor, provided in an effective display region of the display panel, for fingerprint identification; and a first control chip electrically connected to the display panel. When a first region in which the fingerprint sensor is provided and a second region in which the fingerprint sensor is not provided receive a signal indicating display of a same grayscale by the first and second regions, the first control chip adjusts a grayscale of the first region and/or a grayscale of the second region in accordance with the signal, a light transmittance of the first region and a light transmittance of the second region, so that the first region and the second region display the same grayscale.

The locations, shapes, areas and the like of the first region and the second region shown in Fig. 1 are merely illustrative, and there may be an overlapping region between the first region and the second region. The first region and the second region may be set according to practical demands.

In an embodiment, the fingerprint sensor may be a photoelectric sensor, a capacitance sensor or an ultrasonic sensor. However, no matter which kind of sensor is adopted, being provided within the effective display region of the display panel, it will affect the light transmittance of the region where it is located. Thus, if the same processing is performed for the two regions when the first region and the second region receive a signal indicating display of the same grayscale, the grayscale displayed by the first region will be lower than the grayscale displayed by the second region due to occlusion by the fingerprint sensor in the first region, thereby affecting a user's viewing experience.

For example, the light transmittance of the second region is 10%, while the light transmittance of the first region (for example 5%) is lower than the light transmittance of the second region. If the signal received by the first region and the second region indicates displaying a grayscale of 64 and if the grayscales of the first region and the second region are adjusted only according to the received signal, then the grayscale displayed by the second region after the adjustment will be 64. As the light transmittance of the first region is half the light transmittance of the second region, the grayscale displayed by the first region is also half the grayscale displayed by the second region, i.e., 32.

In an embodiment, after a signal indicating display of the same grayscale is received, a grayscale of the first region and/or a grayscale of the second region may be adjusted in accordance with the signal, a light transmittance of the first region and a light transmittance of the second region. Still taking an example where the light transmittance of the second region is 10%, the light transmittance of the first region is 5% and the same grayscale to be displayed is 64, adjustment may be performed for the second region only according to the signal, i.e., the grayscale of the second region may be adjusted to 64. On the other hand, in order for the grayscale displayed by the first region to be consistent with the grayscale displayed by the second region, the brightness of light which passes through the first region may be increased so that it becomes twice the brightness of light which passes through the second region. As such, the brighter light passing through the first region with a lower light transmittance can exhibit the same grayscale displayed by the second region, thereby ensuring the user's viewing experience.

Optionally, the first control chip increases brightness of light which passes through the first region and/or decreases brightness of light which passes through the second region, so that the first region and the second region display the same grayscale.

In an embodiment, it is possible to only increase brightness of light which passes through the first region. For example, as in the foregoing embodiment, the brightness of light which passes through the first region may be adjusted to twice the brightness of light which passes through the second region.

In an embodiment, it is possible to only decrease brightness of light which passes through the second region. For example, under conditions of the foregoing embodiment, the brightness of light which passes through the second region may be adjusted to half the brightness of light which passes through the first region. In this case, although the grayscale which the first region and the second region finally display is lower than the grayscale to be displayed according to the signal, it can still be ensured that the grayscales which the first region and the second region display are the same, thereby ensuring a consistent viewing experience and reducing power consumption of the display apparatus to a certain extent.

In an embodiment, if the difference between the light transmittance of the first region and the light transmittance of the second region is larger than a preset difference (which may be set to for example 30% according to practical demands), it is difficult to make the first region and the second region display the same grayscale by only adjusting brightness of light which passes through a single one of the regions (for example, it is needed to significantly increase brightness of light which passes through the first region or to significantly decrease brightness of light which passes through the second region). In this case, it is possible to not only slightly increase brightness of light passing through the first region but also slightly decrease brightness of light passing through the second region meanwhile, thereby facilitating the first region and the second region to display the same grayscale.

Optionally, when a grayscale corresponding to the signal is a highest grayscale which the display panel can display, the first control chip decreases brightness of light which passes through the second region, so that the first region and the second region display the same grayscale.

In an embodiment, for example, if the range of grayscale which the display panel can display is 0 to 255 and the grayscale corresponding to the signal is 255, then the grayscale which the first region displays cannot reach 255 no matter how the brightness of light which passes through the first region is increased. Thus, the grayscales which the first region and the second region respectively display can be made the same, by decreasing brightness of light which passes through the second region.

In the foregoing embodiment, brightness of light passing through a certain region may be increased or decreased, by adjusting voltages of pixel electrodes corresponding to the region so as to adjust deflection of the liquid crystal corresponding to the region and hence change brightness of light passing through the region or by adjusting luminance of a light source corresponding to the region in the backlight module.

Optionally, the fingerprint sensor includes at least one of the following: a photoelectric sensor, a capacitance sensor and an ultrasonic sensor.

In an embodiment, a photoelectric sensor may identify a fingerprint by receiving light reflected from a finger, an ultrasonic sensor may identify the fingerprint by receiving ultrasonic waves reflected from the finger, and a capacitance sensor may identify a fingerprint based on different capacitance values generated due to difference between valleys and ridges of the fingerprint in terms of their contacts with the surface of the display panel.

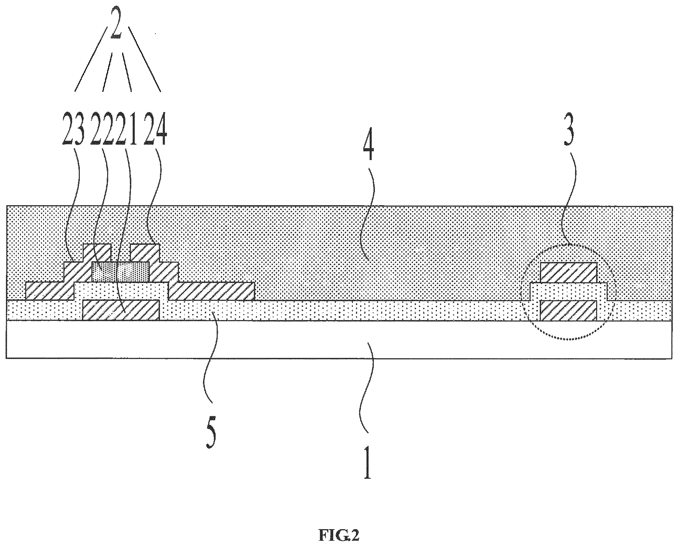

Fig. 2 is a schematic diagram illustrating a structure of an array substrate according to an exemplary embodiment. As shown in Fig. 2, the array substrate comprising a base 1.

In an embodiment, the material of the base may be glass. However, when the array substrate is suitable for a flexible display apparatus, the material of the base may be flexible resin.

A thin film transistor 2 is provided on a side of the base 1.

In an embodiment, as shown in Fig. 2, the thin film transistor 2 may comprise components, such as a gate 21, an active layer 22, a source 23, a drain 24, etc. A gate insulator layer 5 may be provided between the gate 21 and the active layer 22.

A photoelectric sensor 3 is provided on the side of the base 1, for fingerprint identification.

In an embodiment, the photoelectric sensor may be formed on the base, through the same process as for the thin film transistor, e.g., through a patterning process.

In an embodiment, the structure of the photoelectric sensor is not limited to the structure shown in Fig. 2, and the position of the photoelectric sensor is not limited to the position shown in Fig. 2 and also not limited to being directly formed on a base as shown in Fig. 2. For example, the photoelectric sensor may be formed on a thin film transistor. In other words, it may be formed when forming a source and a drain or thereafter. In this case, there may be an overlapping region between the first region and the second region.

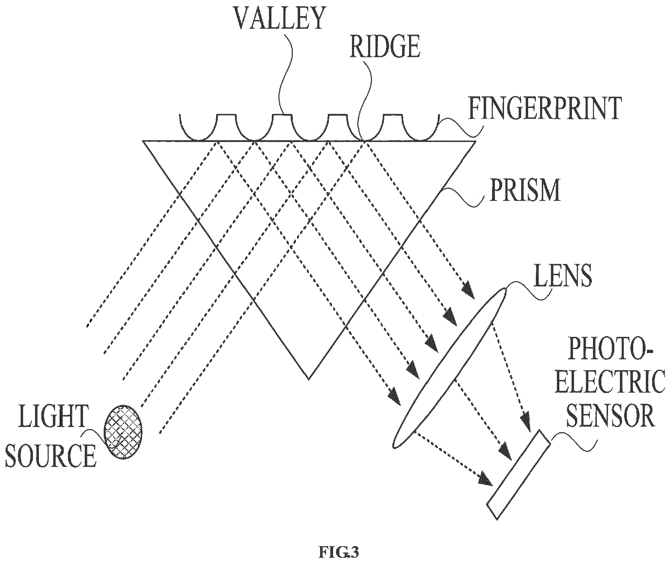

Fig. 3 is a schematic diagram illustrating a principle of fingerprint identification according to an exemplary embodiment. As shown in Fig. 3, a photoelectric sensor may be a component like a photodiode, a phototriode, a phototransistor, etc. When a user's finger presses on the screen surface, light emitted from a light source may be incident on the fingerprint after passing through prisms and the like. Since heights of valleys and ridges of the fingerprint are different, the ridges closely contact the screen while there are gaps of air between the valleys and the screen. Accordingly, lights reflected at the valleys and ridges after being incident thereon are also different. Further, lights incident to the photoelectric sensor after passing through lens are different. The photoelectric sensor may generate a response signal according to the difference between the lights, and determine distribution of valleys and ridges of the fingerprint based on the signal, thereby determining the fingerprint of the user.

A passivation layer 4 is provided on a side of both the thin film transistor 2 and the photoelectric sensor 3 away from the base 1.

In an embodiment, the passivation layer may be made of an insulating material, which is for example silicon oxide, silicon nitride, etc.

In an embodiment, by disposing a photoelectric sensor on a base of an array substrate, the photoelectric sensor can be integrated in the array substrate. In a display apparatus manufactured by using the array substrate, it is possible to place a finger at a position corresponding to a second region of the array substrate for fingerprint identification. Thus, there is no need to set an extra fingerprint identification sensor in the display apparatus, thereby simplifying the manufacturing process and improving the stability and integration of the overall structure.

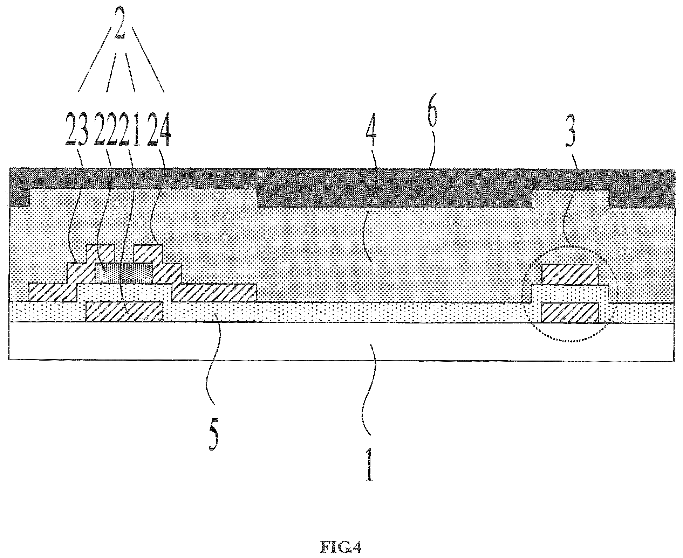

Fig. 4 is a schematic diagram illustrating a structure of another array substrate according to an exemplary embodiment. As shown in Fig. 4, on the basis of the embodiment illustrated in Fig. 2, the array substrate further comprises a flat layer 6 provided on a side of the passivation layer 4 away from the thin film transistor 2.

The case for the passivation layer 4 illustrated in Fig. 1 is an ideal one, in which the upper surface of the passivation layer 4 is relatively flat. In fact, the thin film transistor and the photoelectric sensor which are below the passivation layer 4 protrude relative to the base, so the upper surface of the passivation layer 4 is actually not flat as illustrated in Fig. 4. By further forming a flat layer 6 on the passivation layer 4, the upper surface of the overall structure can be ensured to be relatively flat, thereby facilitating formation of other structures thereon.

Optionally, the photoelectric sensor includes at least one of a photodiode, a phototriode and a phototransistor.

A user may choose a photodiode and/or a phototriode as a photoelectric sensor for fingerprint sensing according to practical demands.

The present invention further provides a display panel comprising the above-described array substrate.

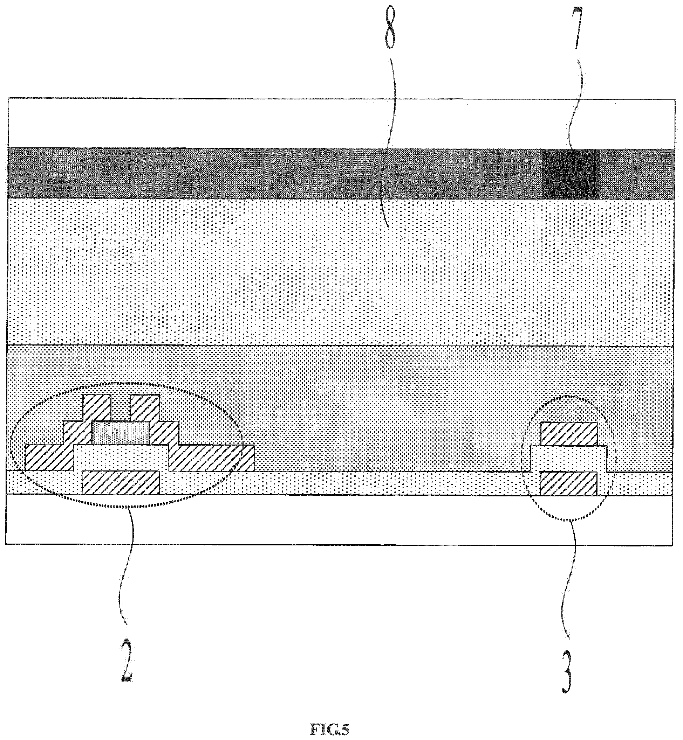

Fig. 5 is a schematic diagram illustrating a structure of a display panel according to an exemplary embodiment. In Fig. 5, structures of the thin film transistor 2 and the photoelectric sensor 3 are simply illustrated. The display panel comprises the above-described array substrate, and further comprises a color film substrate and a liquid crystal layer 8.

The color film substrate is disposed opposite to the array substrate. A black matrix 7 is arranged in the color film substrate and disposed opposite to the photoelectric sensor 3.

The liquid crystal layer 8 is provided between the array substrate and the color film substrate.

In an embodiment, a color film substrate includes not only a black matrix but also at least one color filtering region provided between elements of the black matrix. Each color filtering region is filled with a color filtering material for the corresponding color. For example, there may be provided a red color filtering region, a green color filtering region and a blue color filtering region. Furthermore, there may be further provided a white color filtering region.

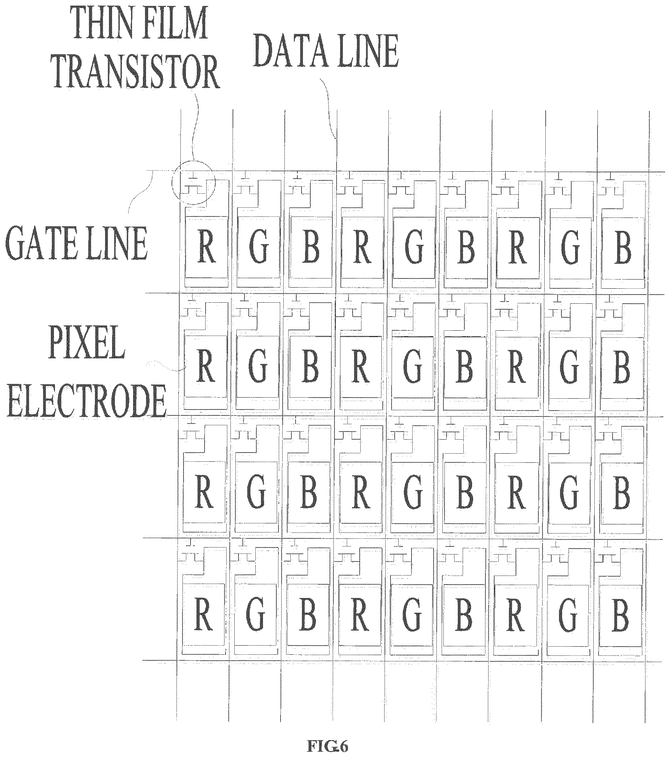

Fig. 6 is a schematic diagram illustrating a structure of another display panel according to an exemplary embodiment. As shown in Fig. 6, the display panel may include multiple data lines and multiple gate lines. The gate lines and the data lines intersect and define multiple sub pixels. In Fig. 6, characters R, G, B denote red, green, blue sub pixels respectively. In the structure illustrated in Fig. 5, a black matrix (not illustrated in Fig. 6) may be provided at positions where the data lines, the gate lines and / or the thin film transistor are located. Correspondingly, the photoelectric sensor (not illustrated in Fig. 6) may also be provided at these positions so as to be blocked by the black matrix from being seen.

In an embodiment, the black matrix may be disposed correspondingly to the thin film transistor, so as to reduce the influence by a scanning signal in a gate of the thin film transistor on the liquid crystal. In this case, the photoelectric sensor may be provided above the thin film transistor, so that positions of the thin film transistor, the photoelectric sensor and the black matrix correspond to each other. In an embodiment, although it is possible to fabricate a photoelectric sensor by using transparent material, the photoelectric sensor will still decrease light transmittance of its corresponding regions, thereby affecting the aperture opening ratio of the display panel. By correspondingly disposing the photoelectric sensor and the black matrix, regions corresponding to the black matrix become non-transparent due to existence of the black matrix. Thus, even if photoelectric sensors are disposed in these regions, the light transmittance will not decrease. Accordingly, the aperture opening ratio of the display panel can be increased as compared with the case in which photoelectric sensors are disposed at other positions.

Optionally, the display apparatus further comprises: a backlight module provided on a side of the array substrate away from the color film substrate.

In an embodiment, the backlight module may comprise a light guide plate and a light bar provided on a side of the light guide plate. Light emitted from the light bar is incident on the light guide plate, turned into light as if emitted from an area light source through refraction and reflection at the light guide plate and then incident towards a display panel.

The touch module is provided on a side of the color film substrate away from the array substrate, or provided between the array substrate and the color film substrate.

In an embodiment, the touch module may be a self-inductance capacitor or a mutual-inductance capacitor. When the touch module is provided on a side of the color film substrate away from the array substrate, its structure may be an OGS structure (e.g., the touch module is provided on protective glass on the outer side of the color film substrate). On the other hand, when the touch module is provided between the array substrate and the color film substrate, its structure may be an On Cell structure (e.g., the touch module is provided between a polarizer on a side of the color film substrate and the base) or an In Cell structure (e.g., the touch module is provided on the array substrate). The user may choose a specific structure of the touch module according to practical demands.

Optionally, the display apparatus further comprises a second control chip electrically connected to the thin film transistor, the photoelectric sensor and the touch module. The touch module transmits a control signal to the second control chip when sensing a touch signal at a position corresponding to the photoelectric sensor, so as to control the photoelectric sensor and the thin film transistor corresponding to the photoelectric sensor to start operation.

In an embodiment, the second control chip may comprise a first integrated circuit, a second integrated circuit and a signal generator electrically connected to these two integrated circuits respectively.

The signal generator is electrically connected to the touch module, and generates and sends a starting signal to the first integrated circuit and the second integrated circuit when receiving a control signal from the touch module. The first integrated circuit may be electrically connected to the thin film transistor via a gate line, and transmits a scanning signal to the gate of the thin film transistor when receiving the starting signal, making the thin film transistor start operation. On the other hand, when receiving the starting signal, the second integrated circuit may control the photoelectric sensor to start operation through wires connected with the photoelectric sensor. Thus, when the user touches the position corresponding to the photoelectric sensor, identification of the user's fingerprint is triggered.

Optionally, the display apparatus further comprises a data line and a pixel electrode. The thin film transistor is electrically connected to the data line and the pixel electrode, and the data line transmits a data signal to the pixel electrode via the thin film transistor. The control chip adjusts the data signal transmitted through the data line corresponding to the photoelectric sensor when receiving the control signal, so that light emitted from the backlight module becomes monochromatic light or white light after passing through the display panel.

In an embodiment, the data line may be electrically connected to a source of the thin film transistor, while the pixel electrode may be electrically connected to a drain of the thin film transistor through a through hole in the passivation layer. Thus, when the thin film transistor is enabled (namely, turned on), the data signal on the data line may be transmitted to the pixel electrode through a source, an active layer and a drain of the thin film transistor.

In an embodiment, light sensed by a photoelectric sensor is incident from a light guide plate towards a display panel, then towards a finger through the display panel, and is next reflected towards the photoelectric sensor by the finger. As currents induced from lights of different colors by the photoelectric sensor are different, when the light from the display panel to the finger is not white light but any other light of mixed colors, the photoelectric sensor may receive, at different regions thereof, reflected lights of different colors, due to spectroscopic effect exerted on the light of mixed colors by material of the display panel. Accordingly, the photoelectric sensor produces an unstable current, which affects the detection result.

When the light from the display panel to the finger is white light, light finally reaching the photoelectric sensor is still mixed into white light, even after undergoing the spectroscopic effect of the material in the display panel. When the light from the display panel to the finger is monochromatic light, no spectroscopic effect will occur during propagation of the light and the light finally reaching the photoelectric sensor is still monochromatic light.

As such, by adjusting the data signal when receiving the control signal, the control chip can adjust the voltage of the pixel electrode to change the deflection of the liquid crystal at the position of the photoelectric sensor, so that red, green and blue sub pixels at the position are all enabled. Accordingly, all the white light incident from the backlight module to the display panel can be emitted out and remain white light after passing through the display panel. Further, the light reflected by the user's finger and the light incident on the photoelectric sensor are still white light. Alternatively, it is possible to enable only a single color sub pixel (e.g., enable the red sub pixel), so that the white light can pass through only the area of the red sub pixel and is filtered by red color filtering material to leave only read light to be emitted out. Accordingly, the light emitted from the display panel is monochromatic red light. Further, the light reflected by the user's finger and the light incident on the photoelectric sensor are also red light.

Optionally, the display apparatus further comprises: a status detection unit configured to detect a working status of the display apparatus and transmit the detected working status to the touch module. The touch module determines whether the display apparatus is in a status of being ready for fingerprint identification when sensing a touch signal at the position corresponding to the photoelectric sensor, and transmits the control signal to the control chip if the display apparatus is in the status of being ready for fingerprint identification.

As the photoelectric sensor is provided in the array substrate (that is, in an effective display region of the display panel), the user may click on an area corresponding to the photoelectric sensor even when performing an operation not requiring fingerprint identification. In this case, waste of power will be incurred if the photoelectric sensor is started.

In an embodiment, by further detecting a working status of the display apparatus, it may be determined whether the display apparatus is in a status of being ready for fingerprint identification when a user clicks on a position corresponding to the photoelectric sensor. The status of being ready for fingerprint identification may include a screen locked status, a fingerprint payment verification status, etc. When the display apparatus is in such a status, it can be determined that the operation of clicking the position corresponding to the photoelectric sensor by the user requires fingerprint identification and the photoelectric sensor is started to operate then. As such, waste of power and loss caused by frequent switching on and off of the photoelectric sensor can be effectively avoided.

Correspondingly to embodiments of the above-described array substrates, the present invention further provides embodiments of a fabricating method of an array substrate.

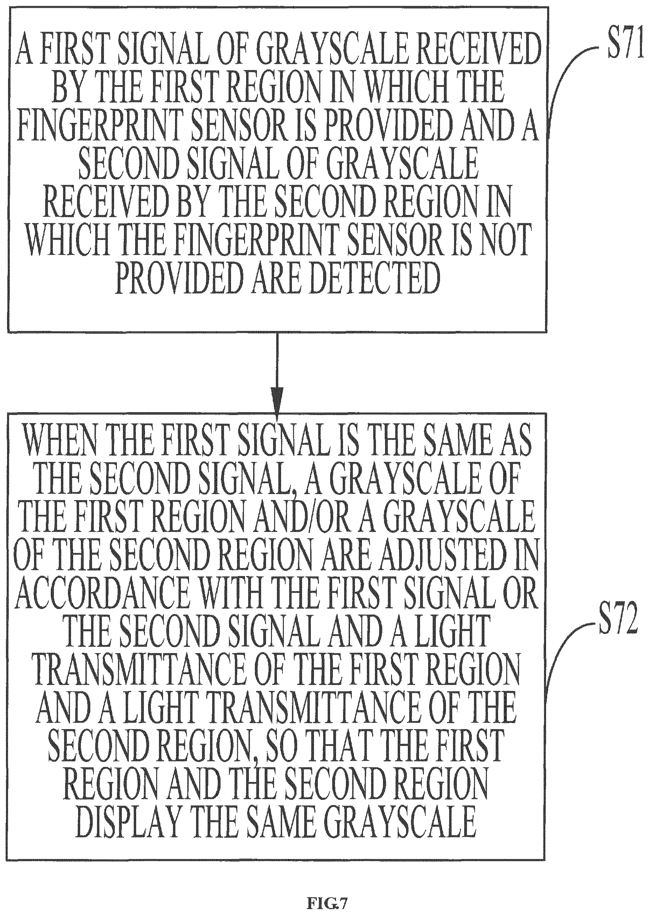

Fig. 7 is a schematic flowchart illustrating a display apparatus controlling method according to an exemplary embodiment. The method may be used in a display apparatus illustrated in Fig. 1 and comprises steps S71 to S72.

At step S71, a first signal of grayscale received by the first region in which the fingerprint sensor is provided and a second signal of grayscale received by the second region in which the fingerprint sensor is not provided are detected.

At step S72, when the first signal is the same as the second signal, a grayscale of the first region and/or a grayscale of the second region are adjusted in accordance with the first signal or the second signal and a light transmittance of the first region and a light transmittance of the second region, so that the first region and the second region display the same grayscale.

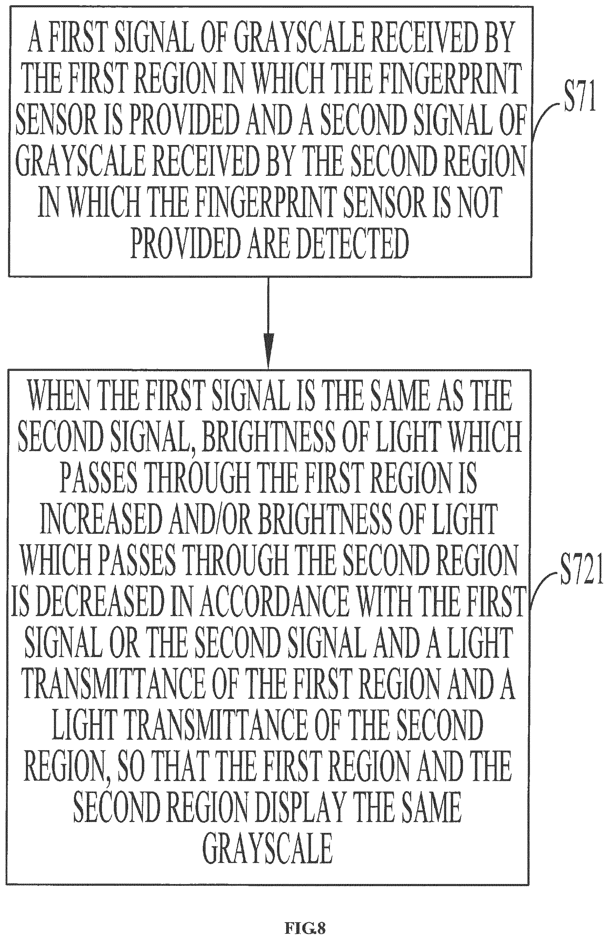

Fig. 8 is a schematic flowchart illustrating another display apparatus controlling method according to an exemplary embodiment. As shown in Fig. 8, on the basis of the embodiment illustrated in Fig. 7, the grayscale of the first region and/or the grayscale of the second region is adjusted, so that the first region and the second region display the same grayscale comprises step S721.

At step S721, brightness of light which passes through the first region is increased and/or brightness of light which passes through the second region is decreased, so that the first region and the second region display the same grayscale.

Optionally, when the grayscale corresponding to the signal is a highest grayscale which the display panel can display, adjusting the grayscale of the first region and/or the grayscale of the second region so that the first region and the second region display the same grayscale comprises: decreasing brightness of light which passes through the second region, so that the first region and the second region display the same grayscale.

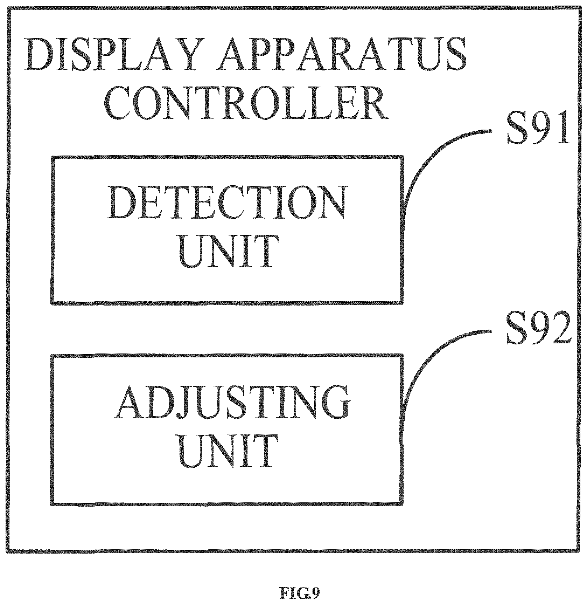

Fig. 9 is a schematic block diagram illustrating a display apparatus controller according to an exemplary embodiment. As shown in Fig. 9, the controller comprises a detection unit 91 and an adjusting unit 92.

The detection unit 91 is configured to detect a first signal of grayscale received by the first region in which the fingerprint sensor is provided and a second signal of grayscale received by the second region in which the fingerprint sensor is not provided.

The adjusting unit 92 is configured to, when the first signal is the same as the second signal, adjust a grayscale of the first region and/or a grayscale of the second region in accordance with the first signal or the second signal and a light transmittance of the first region and a light transmittance of the second region, so that the first region and the second region display the same grayscale.

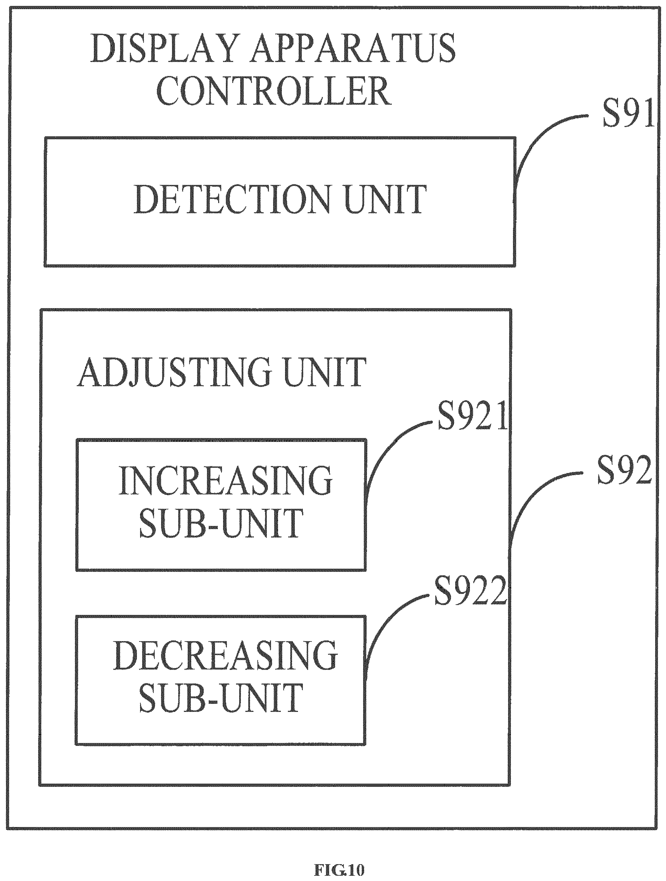

Fig. 10 is a schematic block diagram illustrating another display apparatus controller according to an exemplary embodiment. As shown in Fig. 10, on the basis of the embodiment illustrated in Fig. 9, the adjusting unit 92 comprises an increasing sub-unit 921 and a decreasing sub-unit 922.

The increasing sub-unit 921 is configured to increases brightness of light which passes through the first region, so that the first region and the second region display the same grayscale.

The decreasing sub-unit 922 is configured to decrease brightness of light which passes through the second region, so that the first region and the second region display the same grayscale.

Optionally, the decreasing sub-unit is configured to, when a grayscale corresponding to the signal is a highest grayscale which the display panel can display, decrease brightness of light which passes through the second region, so that the first region and the second region display the same grayscale.

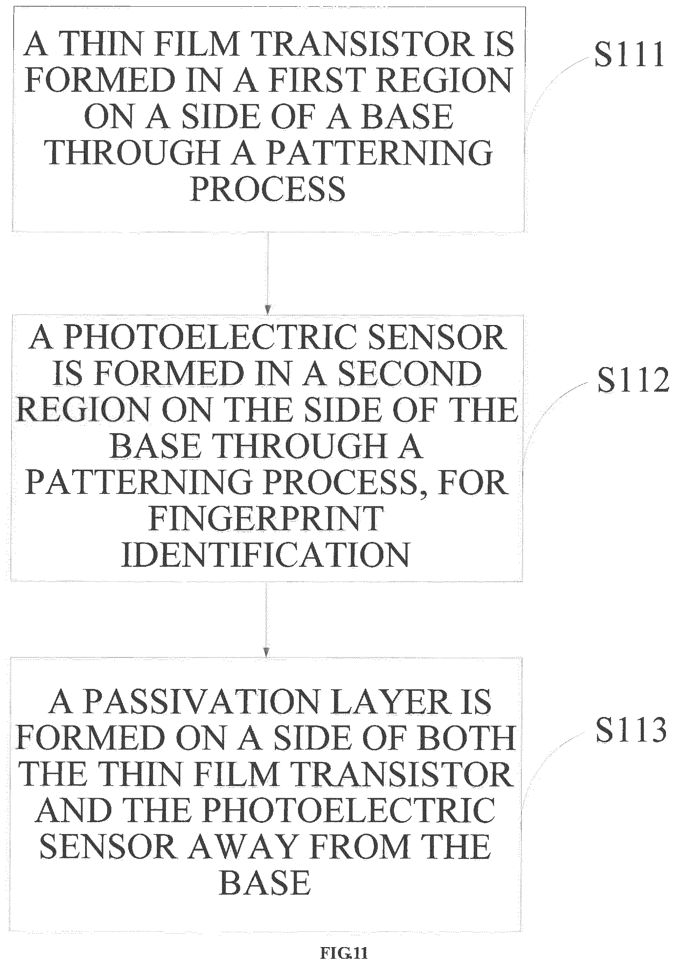

Fig. 11 is a schematic flowchart illustrating a fabricating method of an array substrate according to an exemplary embodiment. As shown in Fig. 11, the fabricating method comprises the following steps S111 to S113.

At step S111, a thin film transistor is formed in a first region on a side of a base through a patterning process.

At step S112, a photoelectric sensor is formed in a second region on the side of the base through a patterning process, for fingerprint identification.

At step S113, a passivation layer is formed on a side of both the thin film transistor and the photoelectric sensor away from the base.

In an embodiment, if the photoelectric sensor is also formed on the base, the step S111 and the step S112 may be performed simultaneously. That is, the photoelectric sensor is formed while forming the thin film transistor. If the photoelectric sensor is formed above the thin film transistor, then the step S111 may be performed before the step S112. In addition, an insulation layer may be further disposed above the thin film transistor, to insulate the source and the drain of the thin film transistor from the photoelectric sensor.

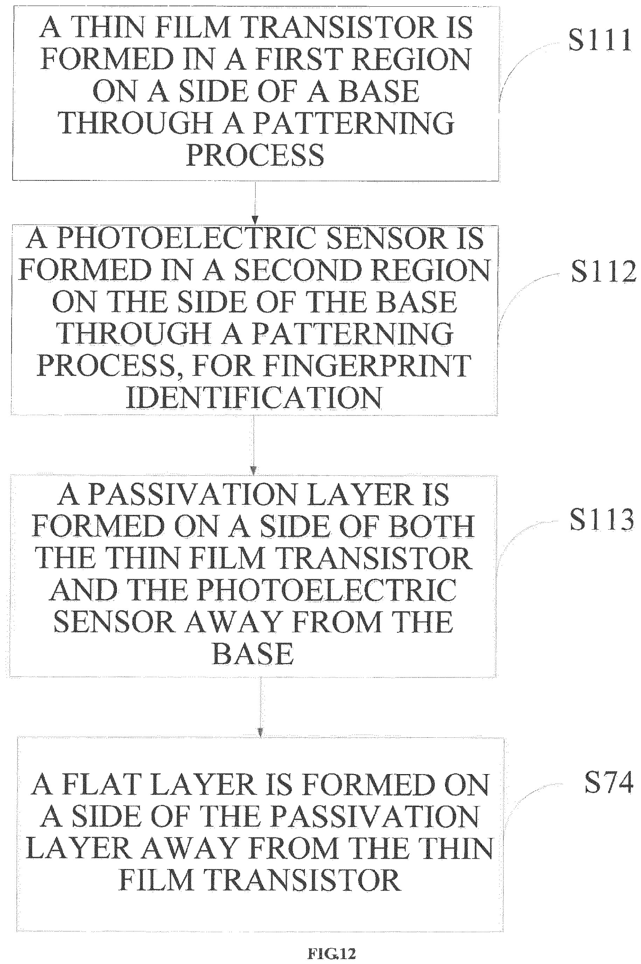

Fig. 12 is a schematic flowchart illustrating another fabricating method of an array substrate according to an exemplary embodiment. As shown in Fig. 12, on the basis of the embodiment illustrated in Fig. 11, the fabricating method further comprises a step S114.

At step S114, a flat layer is formed on a side of the passivation layer away from the thin film transistor.

Regarding the fabricating method in the above embodiments, the specific ways of implementing the individual steps have been described in detail in the embodiments of the related array substrate and will not be elaborated herein.

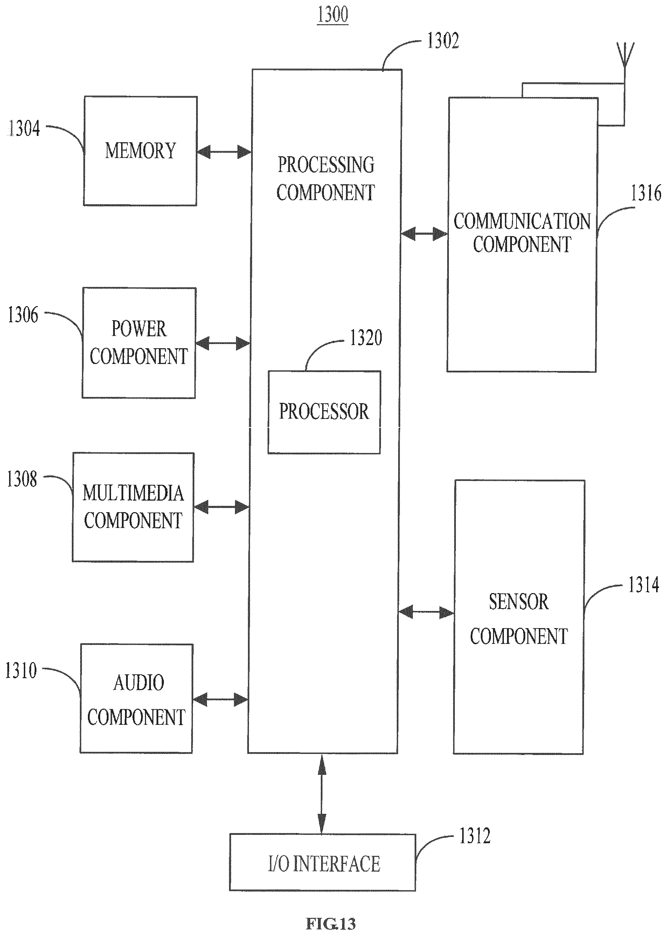

Fig. 13 is a block diagram illustrating a display apparatus 1300 according to an exemplary embodiment. For example, the apparatus 1300 may be a mobile phone, a computer, a digital broadcast terminal, a messaging device, a gaming console, a tablet, a medical device, exercise equipment, a personal digital assistant or the like.

Referring to Fig. 13, the apparatus 1300 may include one or more of the following components: a processing component 1302, a memory 1304, a power component 1306, a multimedia component 1308, an audio component 1310, an input/output (I/O) interface 1312, a sensor component 1314 and a communication component 1318. The apparatus 1300 may further include a display apparatus, which comprises: a display panel; a fingerprint sensor, provided in an effective display region of the display panel, for fingerprint identification; a first control chip electrically connected to the display panel. When a first region in which the fingerprint sensor is provided and a second region in which the fingerprint sensor is not provided receive a signal indicating display of a same grayscale by the first and second regions, the first control chip adjusts a grayscale of the first region and/or a grayscale of the second region in accordance with the signal, a light transmittance of the first region and a light transmittance of the second region, so that the first region and the second region display the same grayscale.

The processing component 1302 generally controls the overall operations of the apparatus 1300, for example, display, phone call, data communication, camera operation and recording operation. The processing component 1302 may include one or more processors 1320 to execute instructions. In addition, the processing component 1302 may include one or more modules to facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operation performed on the apparatus 1300. Examples of such data include any application operated on the apparatus 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power supply management system, one or more power sources, and any other components associated with the generation, management, and distribution of power in the apparatus 1300.

The multimedia component 1308 includes a screen providing an output interface between the apparatus 1300 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive external multimedia data while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the apparatus 1300 is in an operation mode, such as a call mode, a recording mode, and a voice recognition mode. The received audio signal may be further stored in the memory 1304 or transmitted via the communication component 1318. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor or a temperature sensor.

The communication component 1318 is configured to facilitate wired or wireless communication between the apparatus 1300 and other devices. The apparatus 1300 can access a wireless network based on a communication standard, such as WiFi, 2G, or 3G, or a combination thereof. In one exemplary embodiment, the communication component 1318 receives a broadcast signal or broadcast related information from an external broadcast management system via a broadcast channel. In one exemplary embodiment, the communication component 1318 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components.

In exemplary embodiments, there is also provided a non-transitory computer-readable storage medium including instructions, such as included in the memory 1304, executable by the processor 1320 of the apparatus 1300. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the appended claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A display apparatus, comprising:
a display panel;
a fingerprint sensor (1314), provided in an effective display region of the display panel, for fingerprint identification; and
a first control chip (1320) electrically connected to the display panel, wherein, when a first region in which the fingerprint sensor is provided and a second region in which the fingerprint sensor is not provided receive a signal indicating display of a same grayscale by the first and second regions, the first control chip adjusts a grayscale of the first region and/or a grayscale of the second region in accordance with the signal, a light transmittance of the first region and a light transmittance of the second region, so that the first region and the second region display the same grayscale.

2. The display apparatus according to claim 1, wherein
the first control chip increases brightness of light which passes through the first region and/or decreases brightness of light which passes through the second region, so that the first region and the second region display the same grayscale.

3. The display apparatus according to claim 2, wherein
when a grayscale corresponding to the signal is a highest grayscale which the display panel can display, the first control chip decreases brightness of light which passes through the second region, so that the first region and the second region display the same grayscale.

4. The display apparatus according to any of claims 1 to 3, wherein the fingerprint sensor includes at least one of the following: a photoelectric sensor, a capacitance sensor and an ultrasonic sensor.

5. The display apparatus according to claim 4, wherein
when the fingerprint sensor is the photoelectric sensor (3), the display panel comprises an array substrate, the array substrate comprising:
a base (1);
a thin film transistor (2) provided on a side of the base;
the photoelectric sensor (3), provided on the side of the base (1), for fingerprint identification; and
a passivation layer (4) provided on a side of both the thin film transistor (2) and the photoelectric sensor (3) away from the base (1).

6. The display apparatus according to claim 5, wherein the array substrate further comprises:
a flat layer (6) provided on a side of the passivation layer (4) away from the thin film transistor (2).

7. The display apparatus according to claim 5, wherein the display panel further comprises:
a color film substrate disposed opposite to the array substrate,
wherein at least one black matrix (7) is arranged in the color film substrate and disposed opposite to the photoelectric sensor (3).

8. The display apparatus according to claim 5, further comprising:
a backlight module provided on a side of the array substrate away from the color film substrate; and
a touch module provided on a side of the color film substrate away from the array substrate, or provided between the array substrate and the color film substrate.

9. The display apparatus according to claim 8, further comprising:
a second control chip electrically connected to the thin film transistor, the photoelectric sensor and the touch module,
wherein the touch module transmits a control signal to the second control chip when sensing a touch signal at a position corresponding to the photoelectric sensor, so as to control the photoelectric sensor and the thin film transistor corresponding to the photoelectric sensor to start operation.

10. The display apparatus according to claim 8, further comprising:
a data line and a pixel electrode, wherein the thin film transistor is electrically connected to the data line and the pixel electrode, and the data line transmits a data signal to the pixel electrode via the thin film transistor,
wherein the control chip adjusts the data signal transmitted through the data line corresponding to the photoelectric sensor when receiving the control signal, so that light emitted from the backlight module becomes monochromatic light or white light after passing through the display panel.

11. The display apparatus according to claim 8, further comprising:
a status detection unit configured to detect a working status of the display apparatus and transmit the detected working status to the touch module,
wherein the touch module determines whether the display apparatus is in a status of being ready for fingerprint identification when sensing a touch signal at the position corresponding to the photoelectric sensor, and transmits the control signal to the control chip if the display apparatus is in the status of being ready for fingerprint identification.

12. A display apparatus controlling method for use in a display apparatus according to any of claims 1 to 11, the method comprising:
detecting (S71) a first signal of grayscale received by the first region in which the fingerprint sensor is provided and a second signal of grayscale received by the second region in which the fingerprint sensor is not provided; and
when the first signal is the same as the second signal, adjusting (S72) a grayscale of the first region and/or a grayscale of the second region in accordance with the first signal or the second signal and a light transmittance of the first region and a light transmittance of the second region, so that the first region and the second region display the same grayscale.

13. The method according to claim 12, wherein adjusting the grayscale of the first region and/or the grayscale of the second region so that the first region and the second region display the same grayscale comprises:
increasing (S721) brightness of light which passes through the first region and/or decreasing brightness of light which passes through the second region, so that the first region and the second region display the same grayscale.

14. A display apparatus controller for use in a display apparatus according to any of claims 1 to 11, the controller comprising:
a detection unit (91) configured to detect a first signal of grayscale received by the first region in which the fingerprint sensor is provided and a second signal of grayscale received by the second region in which the fingerprint sensor is not provided; and
an adjusting unit (92) configured to, when the first signal is the same as the second signal, adjust a grayscale of the first region and/or a grayscale of the second region in accordance with the first signal or the second signal and a light transmittance of the first region and a light transmittance of the second region, so that the first region and the second region display the same grayscale.

15. An electronic device, comprising:
a processor (1320); and
a memory (1304) storing instructions executable by the processor (1320),
wherein the electronic device further comprises a display apparatus according to any of claims 1 to 11.
